# EUROPÄISCHE PATENTANMELDUNG

(11) **EP 4 338 874 A2**
(43) Veröffentlichungstag der Anmeldung: **20.03.2024**
(21) Anmeldenummer: 23192331.9
(22) Anmeldetag: 21.08.2023
(51) Int. Cl.: B23C 5/06, B23C 5/08, B23C 5/18, B23C 5/28

(54) **FRÄSWERKZEUG, SCHNEIDENTRÄGER UND WERKZEUGKOPF**

(30) Priorität: 26.08.2022 CH 10032022
(71) Anmelder: URMA AG WERKZEUGFABRIK, 5102 Rupperswil (CH)
(72) Erfinder: ZUMSTEG, Gilbert, 5102 Rupperswil (CH); BERGER, Daniel, 5102 Rupperswil (CH)
(74) Vertreter: Frei Patent Attorneys

(57) **Zusammenfassung**

Ein Fräswerkzeug weist einen Werkzeugkopf (2) und einen austauschbaren Schneidenträger (3) auf. Der Werkzeugkopf (2) ist an eine Werkzeugaufnahme (4) ankoppelbar und der Schneidenträger (3) weist eine Mehrzahl um seinen Umfang verteilt angeordnete Schneiden mit jeweils einer vorderseitigen Planschneide (311) und einer winklig dazu verlaufenden Umfangs schneide (312) auf. Dabei weist der Schneidenträger (3), einschliesslich der Schneiden, bei einem Durchmesser von minimal fünfzig mm eine Dicke von maximal zehn mm, insbesondere von maximal sechs mm auf.

## Beschreibung

Die Erfindung bezieht sich auf das Gebiet der Zerspanungswerkzeuge. Sie bezieht sich auf ein Fräswerkzeug, insbesondere zum Planfräsen, und einen Schneidenträger sowie einen Werkzeugkopf gemäss dem Oberbegriff der entsprechenden unabhängigen Patentansprüche.

Fräswerkzeuge insbesondere zum Planfräsen, sind bekannt aus beispielsweise WO 2018/224547 A1 oder DE 10 2017 112374 A1, US 2002/0106251 A1, EP 2484471 A1 und DE 102005031988 A1.

WO 2021/060271 A1 zeigt einen Fräskopf mit einer austauschbaren Schneidenplatte. Kühlmittel wird durch Öffnungen an einen Grundkörper von aussen her in Spanräume geführt.

EP 3 782 751 A1 zeigt einen Scheibenfräser mjt einer flachen Platte mit eingesetzten Schneiden. Die Schneiden sind nicht auf starke Belastungen in axialer Richtung ausgelegt.

CN 108 213 535 B zeigt einen flachen Schneidenträger mit aufgeschraubten Schneiden und integrierten, innenliegenden Kühlkanälen. Die Schneiden sind nicht auf starke Belastungen in axialer Richtung ausgelegt.

Aufgabe der Erfindung ist, ein Fräswerkzeug und einen Schneidenträger sowie einen Werkzeugkopf zu schaffen, welche kostengünstig herstellbar sind und eine hohe Wechselgenauigkeit aufweisen und/oder einen geringen Aufwand beim Austauschen eines abgenutzten Schneidenträgers bedingen, insbesondere ohne erneutes Einstellen des Plan- und Rundlaufes des Fräswerkzeugs an der Maschine.

Diese Aufgabe lösen ein Fräswerkzeug und ein Schneidenträger sowie ein Werkzeugkopf mit den Merkmalen der entsprechenden unabhängigen Patentansprüche.

Das Fräswerkzeug weist einen Werkzeugkopf und einen austauschbaren Schneidenträger auf. Der Werkzeugkopf ist an eine Werkzeugaufnahme ankoppelbar und der Schneidenträger weist eine Mehrzahl um seinen Umfang verteilt angeordnete Schneiden mit jeweils einer vorderseitigen Planschneide und einer winklig dazu verlaufenden Umfangsschneide auf. Dabei weist der Schneidenträger, einschliesslich der Schneiden, bei einem Durchmesser von minimal fünfzig mm, insbesondere minimal sechzig mm, insbesondere minimal neunzig mm, eine Dicke von maximal zehn mm, insbesondere von maximal sechs mm auf.

Aufgrund der geringen Dicke resultiert ein vergleichsweise geringes Volumen und damit eine geringer Materialbedarf zur Herstellung.

In Ausführungsformen ist der Durchmesser des Schneidenträgers maximal zweihundert mm, insbesondere maximal hundertfünfzig mm.

In Ausführungsformen weist der Werkzeugkopf an einer vorderen Stirnseite eine Kühlmittelverteilplatte auf, und weist die Kühlmittelverteilplatte Kühlmittelkanäle auf, um in axialer Richtung zufliessendes Kühlmittel in radiale Richtungen zum Schneidenträger zu leiten. Insbesondere sind die Kühlmittelkanäle innenliegend in der Kühlmittelverteilplatte.

Damit ist es möglich, die Schneidenträger mit Kühlmittel zu versorgen. Innenliegende Kühlmittelkanäle können mit additiven Fertigungstechniken erzeugt werden, und der Grundkörper des Werkzeugkopfs hingegen mit konventionellen Techniken.

In Ausführungsformen weist die Kühlmittelverteilplatte eine Dicke von maximal zehn mm, insbesondere von maximal sechs mm auf. Damit weist dieses vergleichsweise aufwendig herzustellende Teil ein kleines Volumen auf, was die Herstellungszeit verkürzt, insbesondere bei einem additiven Herstellungsverfahren. Die Kühlmittelverteilplatte kann eine rotationszylindrische Form aufweisen.

In Ausführungsformen definiert die Kühlmittelverteilplatte einen Kühlmittelverteilraum, der in axialer Richtung zufliessendes Kühlmittel in radiale Richtungen durch Austrittsöffnungen zum Schneidenträger leitet. Damit ist eine einfache Konstruktion der Kühlmittelverteilplatte möglich.

In Ausführungsformen ist die Kühlmittelverteilplatte mehrteilig, insbesondere zweiteilig aufgebaut, wobei mindestens zwei Teile aneinandergelegt sind wobei zwischen den beiden Teilen Zwischenräume verbleiben, welche die Kühlmittelkanäle bilden. Ein äusseres Teil, dem Grundkörper abgewandt, kann aus Metall, insbesondere Aluminium gefertigt sein. Ein inneres Teil, dem Grundkörper zugewandt, kann aus Kunststoff gefertigt sein. Damit ist eine kostengünstige Konstruktion der Kühlmittelverteilplatte möglich.

In Ausführungsformen ist es der Fall, dass der Schneidenträger an einer Stirnseite, insbesondere an einer vorderen Stirnseite, Kühlmittelrillen zum Führen von Kühlmittel zu den Schneiden hin aufweist, wobei die Kühlmittelrillen von einer, in radialer Richtung gesehen, Innenseite des Schneidenträgers zu einer Aussenseite des Schneidenträgers verlaufen, und wobei Austrittsöffnungen der Kühlmittelkanäle der Kühlmittelverteilplatte auf die Kühlmittelrillen ausgerichtet sind.

Mit anderen Worten: jeweils ein Kühlmittelkanal fluchtet mit einer zugeordneten Kühlmittelrille. Damit ist es möglich, Kühlmittel von den Kühlmittelkanälen in die Kühlmittelrillen einzuleiten und so zu den Schneiden zu führen.

In Ausführungsformen sind die Kühlmittelkanäle auf die Schneiden ausgerichtet. Das heisst, eine Längsachse jeweils eines Kühlmittelkanals ist auf eine zugeordnete Schneide gerichtet. Dadurch wird ein durch den Kühlmittelkanal geführter Kühlmittelstrom auf die Schneide geleitet.

In Ausführungsformen ist folgendes der Fall:
- Seitenwände der Kühlmittelrillen fluchten mit Seitenwänden der Kühlmittelkanäle respektive der Austrittsöffnungen, oder
- Seitenwände der Kühlmittelkanäle respektive der Austrittsöffnungen definieren eine Querschnittsfläche, die in einer Querschnittsfläche enthalten ist, die durch die Seitenwände der Kühlmittelrillen definiert ist.

Das kann bedeuten, dass in Bereichen, in welchen Seitenwände der Kühlmittelrillen vorliegen, eine Querschnittsform der Austrittsöffnungen der Kühlmittelkanäle mit einer Querschnittsform der Kühlmittelrillen übereinstimmt. Die Querschnittsflächen sind in einer Projektion entlang der Strömungsrichtung des Fluids zu verstehen.

Das hat zur Wirkung, dass durch die Kühlmittelkanäle strömendes Kühlmittel beim Übergang in die Kühlmittelrillen nicht mit einem Teil des Schneidenträgers kollidiert. Dies würde zur Ablenkung und Verwirbelung des Kühlmittels führen.

In Ausführungsformen weist das Fräswerkzeug eine zentrale Montageschraube zur Befestigung des Werkzeugkopfs an einer Werkzeugaufnahme auf, und mindestens drei, insbesondere genau vier um die Montageschraube herum angeordnete Stellschrauben, zum Ausüben jeweils einer Kraft in eine Richtung parallel zur Rotationsachse des Fräswerkzeugs, zum Justieren einer Ausrichtung der Rotationsachse.

Damit ist es möglich, eine Feineinstellung der Achsrichtung des Fräswerkzeugs bezüglich einer Maschinenspindel, an welche die Werkzeugaufnahme gekoppelt ist, durchzuführen, und damit auch des Planlaufs des Fräswerkzeugs. Wenn vier Stellschrauben vorliegen, die einander jeweils paarweise bezüglich der Montageschraube gegenüber liegen, lässt sich die Achsrichtung in zwei Richtungen unabhängig einstellen.

In Ausführungsformen weist das Fräswerkzeug einen am Grundkörper ausgebildeten, in axialer Richtung vorstehenden Zentrierring zum Zentrieren eines auf den Grundkörper aufgesetzten Schneidenträgers, insbesondere indem der Zentrierring an einer radialen Aussenfläche als Aussenkonus ausgebildet ist, und der Schneidenträger an einer korrespondierenden Innenfläche als Innenkonus ausgebildet ist.

Damit ist es möglich, den Schneidenträger auf dem Werkzeugkopf zu zentrieren. In Ausführungsformen ist die Kühlmittelverteilplatte zumindest zu einem Teil ihrer Ausdehnung in axialer Richtung innerhalb des Zentrierrings angeordnet. Damit lässt sich eine kurze Bauweise des Fräswerkzeugs erreichen.

In Ausführungsformen weist das Fräswerkzeug entlang eines Umfangs des Grundkörpers angeordnete Einschnitte auf, die ausgehend von Spanräumen zwischen den Schneiden resp. Zähnen des Schneidenträgers in axialer Richtung nach hinten verlaufen und dabei helixartig gekrümmt verlaufen, wobei sie eine mit zunehmendem Abstand vom Schneidenträger zunehmende Steigung aufweisen, und wobei insbesondere eine Anfangssteigung der Einschnitte zwischen dreissig und sechzig Grad beträgt, insbesondere zwischen vierzig und fünfzig Grad.

Damit, insbesondere aufgrund der zunehmenden Steigung der Einschnitte, bildet der Grundkörper in Bereich der umfangsseitigen Einschnitte eine Axialpumpe oder einen Axialverdichter, der Kühlflüssigkeit, gegebenenfalls mit Spänen, in axialer Richtung nach hinten befördert. Die Steigung der Einschnitte ist bezüglich einer Fläche normal zur Werkzeugachse definiert. Eine Steigung von null Grad verläuft also parallel zur Fläche, eine Steigung von 90 Grad parallel zur Werkzeugachse.

Der **Schneidenträger** ist für ein Fräswerkzeug wie vorstehend beschrieben vorgesehen, wobei der Schneidenträger eine Mehrzahl um seinen Umfang verteilt angeordnete Schneiden mit jeweils einer vorderseitigen Planschneide und einer winklig dazu verlaufenden Umfangsschneide aufweist. Dabei weist der Schneidenträger, einschliesslich der Schneiden, bei einem Durchmesser von minimal fünfzig mm, eine Dicke von maximal zehn mm, insbesondere von maximal sechs mm auf.

In Ausfiihrungsformen besteht der Schneidenträger aus Hartmetall, Keramik oder Mischformen.

Mischformen von Metall und Keramik werden auch als Metall-Keramik oder Cermet oder metallisch gebundene Keramik bezeichnet. Damit ist es möglich, den Werkzeugkopf aus einem vergleichsweise günstigen und leichten Material herzustellen und doch ein insgesamt steifes Fräswerkzeug bereitzustellen. In Ausführungsformen ist der Werkzeugkopf aus Stahl, Titan oder sogar Aluminium gefertigt.

In Ausführungsformen sind die Planschneiden und die Umfangsschneiden am Schneidenträger ausgebildet, und besteht der Schneidenträger aus einem einzigen Stück.

Damit ist es möglich, einen einstückigen Schneidenträger einzusetzen der vergleichsweise einfach herstellbar ist: das Grundmaterial für den Schneidenträger ist identisch mit dem Material, dass die Schneiden bildet.

In Ausführungsformen sind die Planschneide und die Umfangsschneide jeweils an Schneidelementen ausgebildet, und sind die Schneidelemente stoffschlüssig am Schneidenträger befestigt.

Damit ist es möglich, höhere Standzeiten für den Schneidenträger zu erreichen. Im Vergleich zu bekannten Schneidenträgern mit einzelnen Wechselschneiden ist keine Einstellung der Schneiden erforderlich. Die fest mit dem Schneidenträger verbundenen Schneidelemente können bei der Herstellung eines Schneidenträgers geschliffen werden. Nach Ende ihrer Lebensdauer wird der gesamte Schneidenträger ausgetauscht. Die Schneidelemente können aus PKD (polykristalliner Diamant) hergestellt sein. Andere Materialien sind MKD (monokristalliner Diamant), CVD-D (chemical vapor deposition-Dickschicht) oder CBN (Kubisches Bor-Nitrid).

In Ausführungsformen ist es der Fall, dass der Schneidenträger an einer Stirnseite, insbesondere an einer vorderen Stirnseite, Kühlmittelrillen zum Führen von Kühlmittel zu den Schneiden hin aufweist, wobei die Kühlmittelrillen von einer, in radialer Richtung gesehen, Innenseite des Schneidenträgers zu einer Aussenseite des Schneidenträgers verlaufen.

Dadurch ist es möglich, trotz der vergleichsweise kleinen Dicke des Schneidenträgers, die es nicht zulässt, Kanäle innerhalb des Schneidenträgers auszubilden, Kühlmittel zu den Schneiden zu führen. Ferner ist, verglichen mit Kanälen innerhalb des Schneidenträgers, die Herstellung der Kühlmittelrillen viel einfacher, da sie sich an einer Aussenfläche des Schneidenträgers befinden.

In Ausführungsformen ist der Schneidenträger als eine flache, ringförmige Platte mit daran ausgeformten Kühlmittelrillen und Befestigungslöchern mit Schraubenkopfaufnahmen ausgebildet.

Damit ist eine einfache Herstellung des Schneidenträgers aus einem plattenformigen Rohling möglich.

In Ausführungsformen weist der Schneidenträger in Achsrichtung eine Dicke von maximal zehn mm, insbesondere von maximal sechs mm, insbesondere von maximal fünf mm auf

In Ausführungsformen stehen die Schneidelemente in Achsrichtung um weniger als drei mm, insbesondere weniger als zwei mm, insbesondere weniger als anderthalb mm vor dem Schneidenträger vor.

Weitere Ausführungsformen ergeben sich aus den weiteren abhängigen Ansprüchen.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1-3: einen Schneidenträger in einer Aufsicht, einem Querschnitt und einer perspektivischen Ansicht;
- Figur 4-8: einen Werkzeugkopf in verschiedenen Ansichten und Schnitten;
- Figur 9-15: ein Fräswerkzeug und dessen Teile gemäss einer anderen Ausführungsform; und
- Figur 16-19: eine Kühlmittelverteilplatte in verschiedenen Ansichten und Explosionszeichnungen.

Grundsätzlich sind in den Figuren gleiche oder gleich wirkende Teile mit gleichen Bezugszeichen versehen.

Allgemein gilt, dass wenn von einer Achsrichtung die Rede ist, damit die Drehachse gemeint ist, um welche sich das Fräswerkzeug im Betrieb dreht. Die Begriffe «radial», «axial», «Umfang» beziehen sich auf diese Achse. Die einer Werkzeugaufnahme zugewandte Seite des Fräswerkzeugs wird als «Hinterseite», die gegenüberliegende als «Vorderseite» bezeichnet.

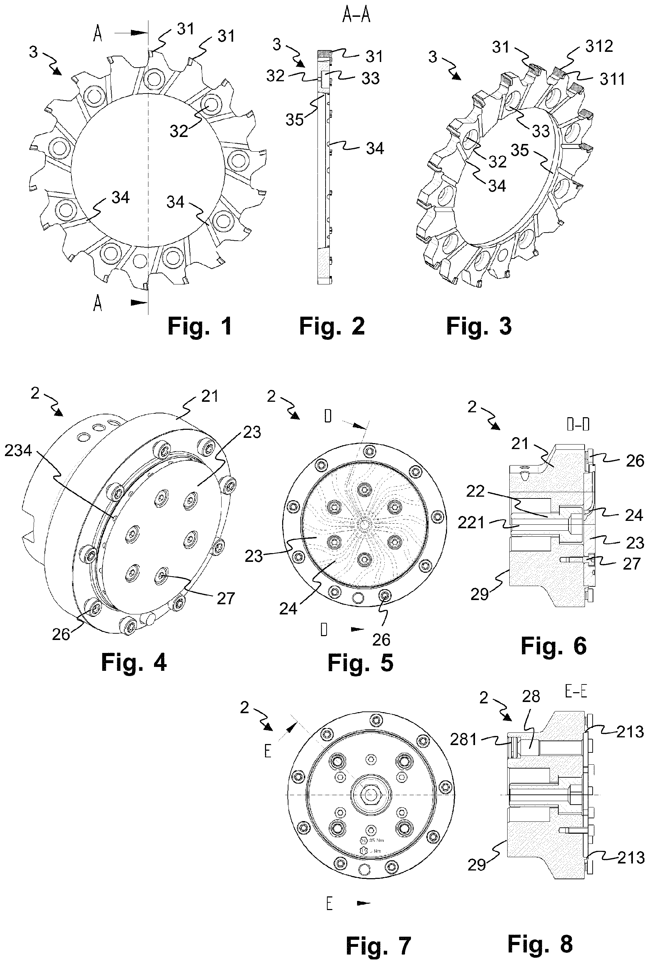

**Figur 1-3** zeigen einen Schneidenträger 3 in einer Aufsicht, einem Querschnitt und einer perspektivischen Ansicht. Der Schneidenträger 3 ist als ringförmige Platte ausgebildet, an welcher entlang des Umfangs Zähne mit Schneiden vorliegen und dazwischen Spanräume ausgebildet sind. An einer Innenseite des Rings kann ein Innenkonus 35 geformt sein, zur präzisen Zentrierung des Schneidenträgers 3 auf einem Werkzeugkopf 2. In anderen Ausführungsformen liegt anstelle des Innenkonus 35 eine zylindrische Verbindung vor. In axialer Richtung ist der Schneidenträger 3 von Befestigungslöchern 32 durchbrochen. Diese weisen jeweils Schraubenkopfaufnahmen 33 auf, in welche Wechselschrauben 26 zur Befestigung des Schneidenträgers 3 am Werkzeugkopf 2 versenkbar sind. Jeder Schneide respektive jedem Zahn ist eine Kühlmittelrille 34 zugeordnet, welche Kühlmittel zur Schneide führt. In den gezeigten Ausführungsformen liegen die Kühlmittelrillen 34 an der vorderen Stirnseite des Schneidenträgers 3, sind also einem Werkstück, das bearbeitet wird, zugewandt. Dadurch werden, obschon die Kühlmittelrillen 34 offen sind, mit dem Werkstück zusammenwirkend Kanäle gebildet, die das Kühlmittel zu den Schneiden führen. Dies ist möglich, weil das Fräswerkzeug 1 zum Planfräsen vorgesehen ist, und dabei nahe an der plan zu fräsenden Fläche des Werkstücks anliegt.

Die Kühlmittelrillen 34 sind an der äusseren resp. vorderen Stirnseite des Schneidenträgers 3 ausgeformt. Dabei kann jeder Schneide eine eigene Kühlmittelrille 34 zugeordnet sein.

In anderen Ausführungsformen, nicht dargestellt, sind sie an der hinteren Stirnseite angeordnet, bilden also. mit dem Grundkörper 21 zusammenwirkend, geschlossene Kanäle.

Schneiden zum Bearbeiten des Werkstücks als Planfräser und gegebenenfalls auch als Eckfräser sind als Planschneiden 311 und als Umfangs schneiden 312 ausgebildet. Diese Schneiden können am Schneidenträger 3 ausgebildet sein, d.h. durch Schleifen der entsprechenden Schneiden (nicht dargestellt). Dazu ist der Schneidenträger 3 aus Hartmetall gebildet. Der ganze Schneidenträger 3 und die Schneiden sind also einstückig geformt. In den Figuren ist hingegen dargestellt, dass die Planschneiden 311 und Umfangsschneiden 312 an jeweils einzelnen Schneidelementen 31 ausgebildet sind. Die Schneidelemente 31 wiederum sind fest mit dem Schneidenträger 3 verbunden, insbesondere stoffschlüssig, beispielsweise durch Hartlöten oder Kleben. In beiden Fällen werden die Schneiden bei der Herstellung des Schneidenträgers 3 alle zusammen geschliffen, und nach Abnutzung wird der Schneidenträger 3 als ganzes ausgetauscht.

Die Schneidelemente 31, falls sie vorliegen, stehen in Achsrichtung um weniger als drei, insbesondere weniger als zwei, insbesondere weniger als anderthalb Millimeter vor dem Schneidenträger 3 vor.

Der Schneidenträger 3 weist in Achsrichtung eine Dicke von maximal zehn mm, insbesondere von maximal sechs mm, insbesondere von maximal fünf mm auf.

Damit ist es möglich, dass der Schneidenträger 3, einschliesslich der Schneiden, mit oder ohne separate Schneidelemente 31, eine Dicke von maximal zehn mm, insbesondere von maximal sechs mm aufweist.

**Figur 4-8** zeigen einen Werkzeugkopf 2 in verschiedenen Ansichten und Schnitten. Der Werkzeugkopf 2 weist einen Grundkörper 21 auf, der an seiner Hinterseite an eine Werkzeugaufnahme 4 ankoppelbar ist, und an seiner Vorderseite zur Aufnahme des Schneidenträgers 3 ausgebildet ist.

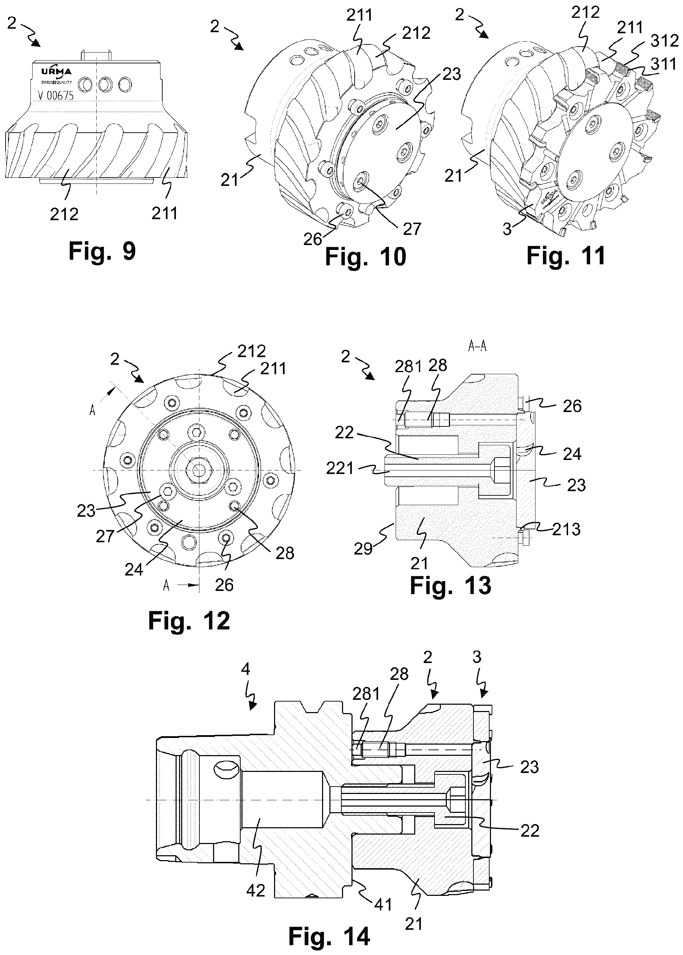

Zum Ankoppeln an die Werkzeugaufnahme 4 liegt eine Montageschraube 22 vor, wobei eine Ausrichtung der Achse bezüglich einer Maschinenspindel, an welche die Werkzeugaufnahme 4 gekoppelt ist, mit Stellschrauben 28 über Zwischenkörper 281 justierbar ist. Dies ist im Zusammenhang mit der **Figur 14** weiter unten erklärt.

Zum Montieren des Schneidenträgers 3 wird er mit Wechselschrauben 26 am Grundkörper 21 verschraubt, wobei die Köpfe der Wechselschraube 26 in den Schraubenkopfaufnahmen 33 versenkt sind. Der Schneidenträger 3 kann einen Innenkonus 35 aufweisen, der auf einen Aussenkonus an einem Zentrierring 213 des Grundkörpers 21 aufgesetzt ist. Der Zentrierring 213 kann als eine in Achsrichtung vom Grundkörper 21 abstehende Rippe ausgebildet sein, so dass er beim Aufsetzen des Schneidenträgers 3 komprimiert werden kann.

Auf die vordere Stirnseite des Grundkörpers 21 ist eine Kühlmittelverteilplatte 23 aufgesetzt und beispielsweise mit Plattenschrauben 27 befestigt. Die Kühlmittelverteilplatte 23 weist innenliegende Kühlmittelkanäle 24 auf, welche in einem mittleren Bereich der Kühlmittelverteilplatte 23 in axialer Richtung her offen sind. So können sie durch einen Längskanal 221 der Montageschraube 22 mit Kühlflüssigkeit versorgt werden. Die Kühlmittelkanäle 24 führen in radialer Richtung durch die Kühlmittelverteilplatte 23 zum Schneidenträger 3. Dabei kann jeder Schneide ein eigener Kühlmittelkanal 24 zugeordnet sein. Die Kühlmittelkanäle 24 treten am Umfang der Kühlmittelverteilplatte 23 aus dieser aus. Bei montiertem Schneidenträger 3 führt jeder Kühlmittelkanal 24 in eine zugeordnete Kühlmittelrille 34 des Schneidenträgers 3. Typischerweise fluchten die beiden miteinander, d.h. die Kühlmittelrille 34 bildet eine Fortsetzung des Kühlmittelkanals 24. Die Kühlmittelkanäle 24 treten an Austrittsöffnungen 234 aus der Kühlmittelverteilplatte 23 aus.

Beim Austauschen eines Schneidenträgers 3 muss, aufgrund der Wechselgenauigkeit der Schneidenträger 3, die Ausrichtung des Werkzeugkopfs 2 bezüglich der Maschinenspindel (Planlauf) nicht nachgestellt werden.

**Figuren 9-15** zeigen ein Fräswerkzeug und dessen Teile gemäss einer anderen Ausführungsform. Die bisher gezeigten und beschriebenen Elemente liegen hier ebenfalls vor, nur mit unterschiedlichen Proportionen. Zusätzlich zu diesen Elementen ist in diesen Figuren Folgendes ersichtlich:
An einem vorderen Ende des Grundkörpers 21 liegen Stützabschnitte 212 vor, die korrespondierend zur Umfangskontur des Schneidenträgers 3 geformt sind, wobei jeweils ein Stützabschnitt 212 einen Zahn des Schneidenträgers 3 in axialer Richtung stützt, d.h. Bearbeitungskräfte in axialer Richtung aufnimmt. Zwischen den Stützabschnitten 212 sind jeweils Pumprillen 211 ausgebildet, in Form von Einschnitten, die ausgehend von Spanräumen zwischen den Schneiden resp. Zähnen in axialer Richtung nach hinten verlaufen. Dabei sind sie helixartig gekrümmt, mit zunehmender Steigung so dass im Betrieb des Fräswerkzeugs 1 eine Pump- oder Sogwirkung entsteht, wodurch Kühlflüssigkeit mit Spänen nach hinten gefördert werden.

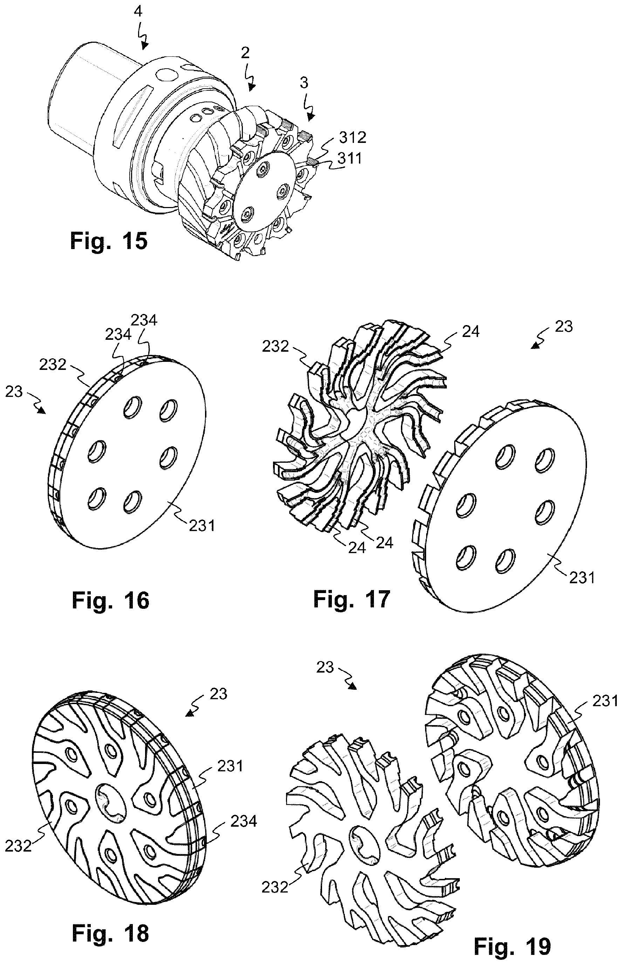

**Figur 10** zeigt einen Werkzeugkopf 2 ohne Schneidenträger 3, **Figur 11** mit Schneidenträger 3. **Figuren 14** und **15** **zeigen** das Fräswerkzeug 1 aufgesetzt auf eine Werkzeugaufnahme 4, in einem Querschnitt und einer perspektivischen Ansicht. In **Figur 14** ist ersichtlich, wie der Werkzeugkopf 2 mittels der Montageschraube 22 an der Werkzeugaufnahme 4 montiert ist. Dabei werden eine hintere Stirnfläche 29 des Werkzeugkopfs 2 und eine Anlagefläche 41 der Werkzeugaufnahme 4 gegeneinander gepresst. Die um die Montageschraube 22 herum verteilten Stellschrauben 28 drücken ebenfalls - über jeweilige Zwischenkörper 281 - auf die Anlagefläche 41 und erlauben dadurch, die Achse des Fräswerkzeugs 1 bezüglich der Drehachse der einer Maschinenspindel auszurichten, an welcher die Werkzeugaufnahme befestigt ist. Die Stellschrauben 28 sind in entsprechenden Gewindebohrungen im Grundkörper 21 versenkt, und können von der Vorderseite her mittels eines Innensechskants verstellt werden. Dazu wird die Kühlmittelverteilplatte 23 abgenommen. **Figur 14** zeigt zudem einen Hohlraum 42 in der Werkzeugaufnahme 4 zum Zuführen von Kühlmittel in den Längskanal 221 der Montageschraube 22.

**Figuren 16-19** zeigen einen mehrteiligen Aufbau einer Kühlmittelverteilplatte 23. **Figur 16** und **17** zeigen die Kühlmittelverteilplatte 23 in einer Sicht von aussen her, **Figur 18** und **19** von innen, das heisst von der Seite des Grundkörpers 21 her. Die Kühlmittelverteilplatte 23 weist ein äusseres Teil oder erstes Teil 231 und ein inneres Teil oder zweites Teil 232 auf, welche aneinandergelegt sind, wobei zwischen den beiden Teilen Zwischenräume verbleiben, welche die Kühlmittelkanäle 24 mit den Austrittsöffnungen 234 bilden.

Für diese Ausführungsform wie auch für die der vorangehenden Figuren gilt: Die Kühlmittelverteilplatte 23 hat die Form eines flachen Zylinders. Die Kühlmittelkanäle 24 führen an Durchgangslöchern für die Plattenschrauben 27 vorbei, so dass die Plattenschrauben 27 nicht in Kontakt mit dem Kühlmittel kommen.

## Patentansprüche

1. Fräswerkzeug (1) mit einem Werkzeugkopf (2) und einem austauschbaren Schneidenträger (3), wobei der Werkzeugkopf (2) an eine Werkzeugaufnahme (4) ankoppelbar ist und der Schneidenträger (3) eine Mehrzahl um seinen Umfang verteilt angeordnete Schneiden mit jeweils einer vorderseitigen Planschneide (311) und einer winklig dazu verlaufenden Umfangsschneide (312) aufweist, **dadurch gekennzeichnet, dass** der Schneidenträger (3), einschliesslich der Schneiden, bei einem Durchmesser von minimal fünfzig mm eine Dicke von maximal zehn mm, insbesondere von maximal sechs mm aufweist.

2. Fräswerkzeug (1) gemäss Anspruch 1, wobei der Werkzeugkopf (2) an einer vorderen Stirnseite eine Kühlmittelverteilplatte (23) aufweist, und die Kühlmittelverteilplatte (23) Kühlmittelkanäle (24) aufweist, um in axialer Richtung zufliessendes Kühlmittel in radiale Richtungen zum Schneidenträger (3) zu leiten, insbesondere wobei die Kühlmittelkanäle (24) innenliegend in der Kühlmittelverteilplatte (23) sind.

3. Fräswerkzeug (1) gemäss Anspruch 1, wobei der Werkzeugkopf (2) an einer vorderen Stirnseite eine Kühlmittelverteilplatte (23) aufweist, und die Kühlmittelverteilplatte (23) einen Kühlmittelverteilraum definiert, der in axialer Richtung zufliessendes Kühlmittel in radiale Richtungen durch Austrittsöffnungen zum Schneidenträger (3) leitet.

4. Fräswerkzeug (1) gemäss Anspruch 2 oder 3, wobei der Schneidenträger (3) an einer Stirnseite, insbesondere an einer vorderen Stirnseite, Kühlmittelrillen (34) zum Führen von Kühlmittel zu den Schneiden hin aufweist, wobei die Kühlmittelrillen (34) von einer, in radialer Richtung gesehen, Innenseite des Schneidenträgers (3) zu einer Aussenseite des Schneidenträgers (3) verlaufen und wobei Austrittsöffnungen (234) der Kühlmittelkanäle (24) der Kühlmittelverteilplatte (23) auf die Kühlmittelrillen (34) ausgerichtet sind insbesondere worin eines oder mehr der Fall ist, von
• Seitenwände der Kühlmittelrillen (34) fluchten mit Seitenwänden der Kühlmittelkanäle (24) respektive der Austrittsöffnungen (234) oder
• Seitenwände der Kühlmittelkanäle (24) respektive der Austrittsöffnungen (234) definieren eine Querschnittsfläche, die in einer Querschnittsfläche enthalten ist, die durch die Seitenwände der Kühlmittelrillen (34) definiert ist.

5. Fräswerkzeug (1) gemäss einem der vorangehenden Ansprüche, aufweisend eine zentrale Montageschraube (22) zur Befestigung des Werkzeugkopfs (2) an einer Werkzeugaufnahme (4), und mindestens drei, insbesondere genau vier um die Montageschraube (22) herum angeordnete Stellschrauben (28), zum Ausüben jeweils einer Kraft in eine Richtung parallel zur Rotationsachse des Fräswerkzeugs (1), zum Justieren einer Ausrichtung der Rotationsachse.

6. Fräswerkzeug (1) gemäss einem der vorangehenden Ansprüche, aufweisend einen am Grundkörper (21) ausgebildeten, in axialer Richtung vorstehenden Zentrierring (213) zum Zentrieren eines auf den Grundkörper (21) aufgesetzten Schneidenträgers (3), insbesondere indem der Zentrierring (213) an einer radialen Aussenfläche als Aussenkonus ausgebildet ist, und der Schneidenträger (3) an einer korrespondierenden Innenfläche als Innenkonus (35) ausgebildet ist.

7. Fräswerkzeug (1) gemäss einem der vorangehenden Ansprüche, aufweisend entlang eines Umfangs des Grundkörpers (21) angeordnete Einschnitte, die ausgehend von Spanräumen zwischen den Schneiden resp. Zähnen des Schneidenträgers (3) in axialer Richtung nach hinten verlaufen und dabei helixartig gekrümmt verlaufen, wobei sie eine mit zunehmendem Abstand vom Schneidenträger (3) zunehmende Steigung aufweisen, und wobei insbesondere eine Anfangssteigung der Einschnitte zwischen dreissig und sechzig Grad beträgt, insbesondere zwischen vierzig und fünfzig Grad.

8. **Schneidenträger** (3) für ein Fräswerkzeug (1) gemäss einem der vorangehenden Ansprüche, wobei der Schneidenträger (3) eine Mehrzahl um seinen Umfang verteilt angeordnete Schneiden mit jeweils einer vorderseitigen Planschneide (311) und einer winklig dazu verlaufenden Umfangsschneide (312) aufweist, **dadurch gekennzeichnet, dass** der Schneidenträger (3), einschliesslich der Schneiden, bei einem Durchmesser von minimal fünfzig mm, eine Dicke von maximal zehn mm, insbesondere von maximal sechs mm aufweist, insbesondere wobei der Schneidenträger (3) aus Hartmetall, Keramik oder Mischformen davon besteht.

9. Schneidenträger (3) gemäss Anspruch 8, wobei die Planschneiden (311) und die Umfangsschneiden (312) am Schneidenträger (3) ausgebildet sind, und der Schneidenträger (3) aus einem einzigen Stück besteht.

10. Schneidenträger (3) gemäss Anspruch 8, wobei die Planschneide (311) und die Umfangsschneide (312) jeweils an Schneidelementen (31) ausgebildet sind, und die Schneidelemente (31) stoffschlüssig am Schneidenträger (3) befestigt sind.

11. Schneidenträger (3) gemäss einem der Ansprüche 8 bis 10, wobei der Schneidenträger (3) an einer Stirnseite, insbesondere an einer vorderen Stirnseite, Kühlmittelrillen (34) zum Führen von Kühlmittel zu den Schneiden hin aufweist, wobei die Kühlmittelrillen (34) von einer, in radialer Richtung gesehen, Innenseite des Schneidenträgers (3) zu einer Aussenseite des Schneidenträgers (3) verlaufen.

12. Schneidenträger (3) gemäss einem der Ansprüche 8 bis 11, wobei der Schneidenträger (3) als eine flache, ringförmige Platte mit daran ausgeformten Kühlmittelrillen (34) und Befestigungslöchern (32) mit Schraubenkopfaufnahmen (33) ausgebildet ist.

13. Schneidenträger (3) gemäss einem der Ansprüche 8 bis 12, wobei der Schneidenträger (3) in Achsrichtung eine Dicke von maximal zehn mm, insbesondere von maximal sechs mm, insbesondere von maximal fünf mm aufweist.

14. Schneidenträger (3) gemäss einem der Ansprüche 8 bis 13 in Abhängigkeit von Anspruch 10, wobei die Schneidelemente (31) in Achsrichtung um weniger als drei mm, insbesondere weniger als zwei mm, insbesondere weniger als anderthalb mm vor dem Schneidenträger (3) vorstehen.

15. **Werkzeugkopf** (2) für ein Fräswerkzeug (1) gemäss einem der Ansprüche 1 bis 7, wobei der Werkzeugkopf (2) an eine Werkzeugaufnahme (4) ankoppelbar ist, wobei der Werkzeugkopf (2) an einer vorderen Stirnseite eine Kühlmittelverteilplatte (23) aufweist, und die Kühlmittelverteilplatte (23) Kühlmittelkanäle (24) aufweist, um in axialer Richtung zufliessendes Kühlmittel in radiale Richtungen aus der Kühlmittelverteilplatte (23) zu leiten, insbesondere wobei die Kühlmittelkanäle (24) innenliegend in der Kühlmittelverteilplatte (23) sind, oder wobei der Werkzeugkopf (2) an einer vorderen Stirnseite eine Kühlmittelverteilplatte (23) aufweist, und die Kühlmittelverteilplatte (23) einen Kühlmittelverteilraum definiert, der in axialer Richtung zufliessendes Kühlmittel in radiale Richtungen durch Austrittsöffnungen aus der Kühlmittelverteilplatte (23) leitet.
